Europäisches Patentamt

European Patent Office

Office européen des brevets

(19)

(11) Veröffentlichungsnummer: **0 256 230 B1**

(12) **EUROPÄISCHE PATENTSCHRIFT**

(45) Veröffentlichungstag der Patentschrift: **27.12.91**

(51) Int. Cl.⁵: **G01B 21/02**, G01D 5/26

(21) Anmeldenummer: **87107630.3**

(22) Anmeldetag: **26.05.87**

(54) **Längenmesseinrichtung.**

(30) Priorität: **09.08.86 DE 3627079**

(43) Veröffentlichungstag der Anmeldung:
**24.02.88 Patentblatt 88/08**

(45) Bekanntmachung des Hinweises auf die
Patenterteilung:
**27.12.91 Patentblatt 91/52**

(84) Benannte Vertragsstaaten:
**AT CH DE ES FR GB IT LI NL SE**

(56) Entgegenhaltungen:
**CH-A- 646 783**
**DD-A- 120 707**

**DR. JOHANNES HEIDENHAIN, Prospekt**
**"Gekapseltes Universal-Längenmesssystem**
**ULS, Walzspalt-Messsystem WMS" Februar**
**1982**

(73) Patentinhaber: **Dr. Johannes Heidenhain**
**GmbH**
**Dr.-Johannes-Heidenhain-Strasse 5 Postfach**
**1260**
**W-8225 Traunreut(DE)**

(72) Erfinder: **Affa, Alfred, Ing.(grad.)**
**Hochfellnstrasse 6**
**W-8221 Stein(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Längenmeßeinrichtung gemäß dem Oberbegriff des Anspruchs 1.

Eine derartige Längenmeßeinrichtung wird insbesondere zur Ermittlung der Relativlage von Werkstück und Werkzeug bei numerisch gesteuerten Bearbeitungsmaschinen eingesetzt.

Aus dem Firmenprospekt "Gekapseltes Universal-Längenmeßsystem ULS, Walzspalt-Meßsystem WMS", Ausgabe Februar 1982 der DR. JOHANNES HEIDENHAIN GmbH, ist eine derartige Längenmeßeinrichtung bekannt. Ein Glasmaßstab als Träger einer Maßverkörperung wird von einer photoelektrischen Abtasteinheit im Durchlicht abgetastet. Die Abtasteinheit ist in einem Gehäuse reibungsarm in Meßrichtung verfahrbar gelagert. Sie besteht aus einer, auf einer Seite des Trägers angeordneten Lampe und aus vier in Meßrichtung versetzt und auf der anderen Seite des Trägers angeordnete Empfänger. Die Spannungsversorgung der Lampe und die Abnahme der Abtastsignale von den Empfängern erfolgt über elektrische Leitungen eines Kabels. Ein Ende des Kabels ist an der Abtasteinheit und das andere Ende an einer am Gehäuse angebrachten Buchse als Anschlußbaustein angeschlossen.

Bei Relativbewegungen zwischen der Abtasteinheit und dem Gehäuse ändert sich laufend der Abstand zwischen der Abtasteinheit und der Buchse. Das bedeutet, daß das Kabel zwischen der Abtasteinheit und der Buchse laufend bewegt wird. Damit diese Bewegungen ungehindert erfolgen können, wird innerhalb des Gehäuses ein freier Raum benötigt, wodurch die Baugröße der Meßeinrichtung zunimmt.

Die Bewegungen des Kabels im begrenzten freien Gehäuseraum können zu Beschädigungen des Kabels und somit zu Ausfällen der Meßeinrichtung führen.

Aus der nicht vorveröffentlichten deutschen Patentanmeldung P 36 13 755.3 (DE-OS 36 13 755) ist ebenfalls bereits eine Längenmeßeinrichtung bekannt, bei der ein Glasmaßstab von einer an einer Stange befestigten Abtasteinheit lichtelektrisch abgetastet wird. Der Glasmaßstab ist mit dem ersten Objekt und die Stange mit dem zum ersten Objekt relativ beweglichen anderen Objekt verbunden. In der Stange ist eine axiale Bohrung ausgebildet, in der eine von der Abtasteinheit nach außen reichende Leitung geführt ist.

Die Stange ist an beiden Enden direkt mit dem Maschinenbett verbunden. Die Leitung führt undefiniert aus der axialen Bohrung heraus, und es können Zugspannungen auf die Leitung und somit Kräfte auf die Abtasteinheit einwirken.

Der Erfindung liegt die Aufgabe zugrunde, eine Längenmeßeinrichtung der oben genannten Gattung anzugeben, die kompakt aufgebaut ist und bei der ein zuverlässiger Betrieb gewährleistet ist.

Diese Aufgabe wird erfindungsgemäß durch die kennzeichnenden Merkmale des Patentanspruchs 1 gelöst.

Die mit der Erfindung erzielten Vorteile bestehen insbesondere darin, daß die Leitung zwischen der Abtasteinheit und dem Anschlußbaustein fest verlegt ist. Ein Verschleiß der Leitung und eine dadurch hervorgerufene Störung des Meßbetriebes wird vermieden. Desweiteren wird mit der Erfindung eine kleine Bauform der Meßeinrichtung ermöglicht, indem das Anbaustück die Schubstange mit dem einen Objekt verbindet und in dieses Anbaustück die Leitung geführt ist. Das Anbaustück kann durch die Winkelbeweglichkeit an jede Anbaufläche angebaut werden, ohne daß unzulässige Kräfte auf die Schubstange und auf die Abtasteinheit wirken.

Vorteilhafte Ausbildungen der Erfindung sind in den abhängiger Patentansprüchen angegeben.

Ausführungsbeispiele der Erfindung werden anhand der Zeichnung näher erläutert.

Es zeigt

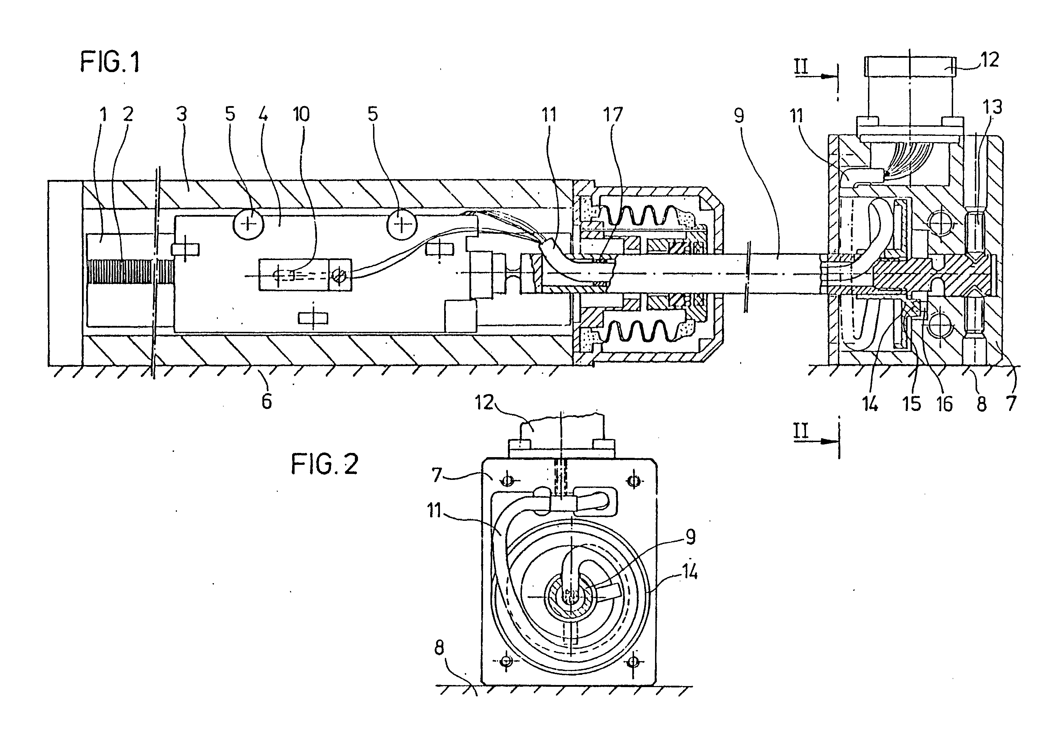

Figur 1      eine Längenmeßeinrichtung gemäß der Erfindung im Querschnitt,

Figur 2      einen Schnitt nach der Linie II-II in Figur 1.

Ein Glasmaßstab 1 mit einer inkrementalen Teilung 2 ist als Maßverkörperung in ein Gehäuse 3 eingeklebt. Eine photoelektrische Abtasteinheit 4 wird mittels Rollen 5 reibungsarm auf dem Glasmaßstab 1 sowie an inneren Gehäuseflächen geführt. Zur Messung der Relativlage zweier Maschinenteile ist das Gehäuse 3 an einem Maschinenbett 6 befestigt und ein Anbaustück 7 an einem Maschinenschlitten 8. Eine Schubstange 9 verbindet das Anbaustück 7 mit der Abtasteinheit 4, so daß Relativbewegungen des Maschinenschlittens 8 in Meßrichtung auf die Abtasteinheit 4 übertragen werden. Die inkrementale Teilung 2 wird von einer Lampe 10 der Abtasteinheit 4 beleuchtet, und das modulierte Licht wird von vier in Meßrichtung versetzt angeordneten Empfängern aufgenommen. In den Figuren sind die Empfänger nicht gezeigt. Ein Kabel 11 ist von der Abtasteinheit 4 zu dem Anbaustück 7 in der als Rohr ausgebildeten Schubstange 9 verlegt. An dem Anbaustück 7 ist eine Buchse 12 befestigt, mit der die elektrischen Leitungen des Kabels 11 verbunden sind. Im Kabel 11 sind elektrische Leitungen zur Energieversorgung der Lampe 10 und zur Abnahme der Empfänger-Abtastsignale vorhanden. Bei Relativbewegungen des Gehäuses 3 gegenüber dem Anbaustück 7 in Meßrichtung bleibt das Kabel 11 in Ruhe, da der Abstand zwischen der Abtasteinheit 4 und der Buchse 12 konstant bleibt. An die Buchse 12 kann ein Verbindungskabel mittels eines Steckers angebracht werden. In diesem nicht dargestellten Verbindungskabel können elektrische Leitungen von einer externen Energiequelle ausgehend sowie elektrische Leitungen zu einer Anzeige- oder Auswerteeinheit führend, integriert sein.

Das quaderförmige Anbaustück 7 ist um die Längsachse der Schubstange 9 drehbar gelagert. Dies hat den Vorteil, daß das Anbaustück 7 beliebig an den Maschinenschlitten 8 angebaut werden kann. Die Buchse 12 kann den Anforderungen entsprechend ausgerichtet werden, und Fehlausrichtungen der Anbauflächen des Maschinenbettes 6 und des Maschinenschlittens 8 werden ausgeglichen.

Das Anbaustück 7 wird im gezeigten Beispiel nach dem Anbau der gesamten Meßeinrichtung an eine Maschine über Schrauben 13 mit der Schubstange 9 fest verbunden. Diese Verbindung könnte aber auch so ausgeführt werden, daß sich das Anbaustück 7 während des Meßbetriebes um die Längsachse der Schubstange 9 drehen kann. Dadurch können durch Führungsfehler von Maschinenteilen hervorgerufene Meßfehler ausgeglichen werden, ohne daß unzulässige Zwangskräfte auf die Schubstange 9 und somit auf die Abtasteinheit 4 wirken. Die Verbindung zwischen dem Anbaustück 7 und der Schubstange 9 muß aber in allen Fällen so ausgeführt sein, daß die Steifigkeit in Meßrichtung gewährleistet ist.

Das Kabel 11 tritt innerhalb des Anbaustückes 7 in einen Hohlraum seitlich aus der Schubstange 9 aus und ist zu der Buchse 12 geführt. In diesem Hohlraum bildet das Kabel 11 eine oder mehrere Windungen, um eine ungehinderte Drehbewegung des Anbaustückes 7 um die Längsachse der Schubstange 9 zu gewährleisten. Je nach der Winkellage des Anbaustückes 7 bildet das Kabel 11 Windungen mit kleinen oder mit größeren Radien. Ein Teller 14 ist fest mit der Schubstange 9 verbunden und gibt dem Kabel 11 die Vorzugsrichtung der Windungen an. Es sind aber auch Ausführungen ohne diesen Teller 14 denkbar.

Ein Anschlagstück 15 am Teller 14 und ein Gegenstück 16 am Anbaustück 7 begrenzt die Drehbewegungen um nahezu 360 Grad. Dieser Anschlag gewährleistet, daß keine unzulässige Zugspannung auf das Kabel 11 ausgeübt wird.

Eine Dichtung 17 zwischen der Rohrwandung der Schubstange 9 und dem in der Schubstange 9 befindlichen Kabel 11 verhindert das Eindringen von Flüssigkeiten und Staub in das Gehäuse 3.

In nicht gezeigter Ausführung kann die Buchse auch an oder in einer Fläche senkrecht zur Längsachse der Schubstange am Anbaustück befestigt werden. Es ist auch denkbar, die Buchse an dem Ende der Schubstange zu befestigen, wobei die Buchse selber als anbaufähiger Anschlußbaustein ausgebildet sein kann.

Die Erfindung ist nicht auf die gezeigte inkrementale photoelektrische Meßeinrichtung beschränkt. Sie schließt auch andere Meßeinrichtungen ein, beispielsweise kapazitive, magnetische und induktive Einrichtungen inkrementaler oder absoluter Art.

Die Abtastsignale, welche von der Abtasteinheit zu dem Anbaustück geleitet werden, müssen nicht elektrischer Art sein, es sind auch andere übertragbare Signale denkbar, so z. B. optische Lichtsignale. Dementsprechend müssen auch die Leitungen ausgelegt sein, beim genannten Beispiel wären Lichtwellenleiter zu verwenden.

## Patentansprüche

1. Längenmeßeinrichtung zur Messung der Relativlage zweier zueinander beweglicher Objekte, bei der eine Maßverkörperung (2) eines in einem Gehäuse (3) befestigten Trägers (1) von einer, im Gehäuse gelagerten, Abtasteinheit (4) abgetastet wird und Abtastsignale erzeugt werden, bei der ferner das Gehäuse (3) am ersten Objekt und ein Anbaustück (7) am anderen Objekt befestigt und die Abtasteinheit mit dem Anbaustück (7) über eine Schubstange (9) verbunden ist, dadurch gekennzeichnet, daß

   a) zumindest eine Leitung (11) zur Übertragung der Abtastsignale von der Abtasteinheit (4) in der Schubstange (9) zu dem Anbaustück (7) geführt ist;
   b) das Anbaustück (7) zumindest während des Anbaus relativ zur Schubstange (9) um die Längsachse der Schubstange (9) winkelbeweglich ist;
   c) das Anbaustück (7) einen Raum aufweist, in dem die Leitung (11) spiralförmig gewickelt ist.

2. Längenmeßeinrichtung nach Anspruch 1, dadurch gekennzeichnet, daß die zumindest eine Leitung ein elektrisches Kabel (11) oder ein Lichtwellenleiter ist.

3. Längenmeßeinrichtung nach Anspruch 1 oder 2, dadurch gekennzeichnet, daß das Anbaustück (7) relativ zur Schubstange (9) um die Längsachse der Schubstange (9) in einem Bereich von etwa 360 Grad winkelbeweglich ist.

4. Längenmeßeinrichtung nach einem der Ansprüche 1 - 3, dadurch gekennzeichnet, daß die Leitung (11) im Raum des Anbaustückes (7) seitlich aus der Schubstange (9) austritt und im Raum zumindest eine Windung bildet, daß ferner am Anbaustück (7) ein Anschlußbaustein (12) angebracht ist, an die die Leitung (11) angeschlossen ist.

## Claims

1. Length measuring device for measuring the relative position of two objects movable relative to one another, in which a scale unit (2) of a carrier (1) fixed in a housing (3) is sensed by a sensing unit (4) mounted in the housing and sensing signals are generated, in which further the housing (3) is fixed to the first object and an attachment part (7) to the other object and the sensing unit is connected to the attachment part (7) by a push-rod (9), characterized in that

   a) at least one line (11) for transmitting the sensing signals from the sensing unit (4) is fed through the push-rod (9) to the attachment part (7);
   b) the attachment part (7) is angularly movable realtive to the push-rod (9) about the longitudinal axis of the push-rod (9) at least during assembly;
   c) the attachment part (7) has at least one chamber in which the line (11) is wound spirally.

2. Length measuring device according to claim 1, characterized in that the at least one line is an electrical cable (11) or a light guide.

3. Length measuring device according to claim 1 or 2, characterized in that the attachment part (7) is angularly movable relative to the push-rod (9) about the longitudinal axis of the push-rod (9) in a range of about 360 degrees.

4. Length measuring device according to one of claims 1 - 3, characterized in that the line (11) emerges laterally from the push-rod (9) into the chamber of the attachment part (7) and forms at least one turn in the chamber, further in that a terminal unit (12) is arranged on the attachment part (7), to which unit the line (11) is connected.

## Revendications

1. Dispositif de mesure de longueurs pour la mesure de la position relative de deux objets pouvant se déplacer l'un par rapport à l'autre, dans lequel une mesure matérialisée (2) d'un support (1) fixé à l'intérieur d'un boîtier (3) est lue par une unité de lecture (4) montée à l'intérieur dudit boîtier (3) et des signaux de lecture sont produits, et dans lequel en outre le boîtier (3) est fixé sur le premier objet et l'unité de lecture est reliée à l'élément auxiliaire (7) par l'intermédiaire d'une tige de commande (9), caractérisé en ce que

   a) au moins une ligne (11) pour la transmission des signaux de lecture va de l'unité de lecture (4) à l'élément auxiliaire (7) à l'intérieur de la tige de commande (9);
   b) l'élément auxiliaire (7) est mobile angulairement autour de l'axe longitudinal de la tige de commande (9), au moins pendant le montage;
   c) l'élément auxiliaire (7) comporte une cavité à l'intérieur de laquelle la ligne (11) est enroulée en spirale.

2. Dispositif de mesure de longueurs selon la revendication 1 caractérisé en ce qu'une ligne au moins est un câble électrique (11) ou une fibre optique.

3. Dispositif de mesure de longueurs selon la revendication 1 ou 2 caractérisé en ce que l'élément auxiliaire (7) peut tourner autour de l'axe longitudinal de la tige de commande (9), par rapport à la tige de commande (9), à l'intérieur d'une plage angulaire d'environ 360°.

4. Dispositif de mesure de longueurs selon l'une des revendications 1 à 3 caractérisé en ce que la ligne (11) sort sur le côté de la tige de commande (9) dans la cavité de l'élément auxiliaire (7) et forme au moins une boucle à l'intérieur de celle-ci, et en ce qu'en outre un organe de connexion (12) auquel est reliée la ligne (11) est monté sur l'élément auxiliaire (7).

FIG.1

FIG.2

EP 0 256 230 B1